# EUROPÄISCHE PATENTSCHRIFT

(11) **EP 0 461 452 B1**
(45) Veröffentlichungstag und Bekanntmachung des Hinweises auf die Patenterteilung: **11.08.1993**
(21) Anmeldenummer: 91108571.0
(22) Anmeldetag: 27.05.1991
(51) Int. Cl.: B01J 37/02, B01J 35/02, B01J 35/04

(54) **Metallfolienträgerkatalysator**
Metal foil catalyst support
Support de catalyseur en feuilles métallique

(30) Priorität: 02.06.1990 DE 4017892
(43) Veröffentlichungstag der Anmeldung: 18.12.1991
(73) Patentinhaber: SOLVAY CATALYSTS GmbH, D-30173 Hannover (DE)
(72) Erfinder: Falke, Holger, W-3005 Hemmingen 1 (DE); Strauss, Günther, W-3000 Hannover (DE)
(74) Vertreter: Lauer, Dieter, Dr.

(56) Entgegenhaltungen:
- EP-A- 0 149 912
- DE-A- 3 501 941
- DE-A- 3 744 020
- FR-A- 2 214 818
- US-A- 4 483 940

## Beschreibung

Die Erfindung bezieht sich auf Trägerkatalysatoren zur katalytischen Behandlung gasförmiger Medien bei Temperaturen unterhalb von etwa 100 °C und ihre Anwendung.

Trägerkatalysatoren zur katalytischen Behandlung gasförmiger Medien im Mitteltemperatur- und Tieftemperaturbereich sind bereits bekannt. So beschreibt die deutsche Patentanmeldung DE-A- 39 14 294 einen Trägerkatalysator zur Oxidation von Kohlenmonoxid, der bei Umgebungstemperatur arbeitet. Dieser Trägerkatalysator umfaßt ein katalytisch aktives Gemisch von Gold oder Gold und Einsenoxid auf Eisenoxid. Die deutsche Patatanmeldung DE-A- 39 20 428 beschreibt einen Trägerkatalysator zur katalytischen Zersetzung von Ozon. Dieser Trägerkatalysator arbeitet ebenfalls bei Umgebungstemperatur und umfaßt ein, die katalytische Zersetzung von Ozon bewirkendes Material, beispielsweise Metalle oder Übergangsmetalloxide, insbesondere Hopcalit, aufgebracht auf einen Schaumstoffträger.

Die DE-A- 37 44 020 beschreibt eine Katalysatorpatrone zur Beseitigung von Schadstoffen in Verbrennungsabgasen. Die Patrone enthält ein spiralförmig gewickeltes Metallband, wobei in den Spiralräumen ein Faservlies aus Katalysator-Trägerfasern angeordnet ist.

Die FR-A-22 14 818 beschreibt einen Trägerkatalysator zur Beseitigung von Schädstoffen in Verbrennungsabgasen, der ebenfalls spiralförmig gewickelte Metallbänder enthält, wobei als Abstandhalter Wellungen ausgebildet sind, die die katalytisch wirksamen Substanzen aufnehmen.

Aufgabe der Erfindung war es, neuartige Trägerkatalysatoren zur katalytischen Behandlung gasförmiger Medien bei Temperaturen unterhalb von etwa 100 °C zur Verfügung zu stellen, die die Palette der bereits bekannten Trägerkatalysatoren sinnvoll erweitern.

Diese Aufgabe wird durch den erfindungsgemäßen Trägerkatalysator zur katalytischen Behandlung gasförmiger Medien gelöst. Der erfindungsgemäße Trägerkatalysator zur katalytischen Behandlung gasförmiger Medien bei Temperaturen unterhalb von etwa 100 °C umfaßt:
a) einen aus Metallfolie einer Dicke von höchstens 0,5 mm gebildeten Trägerkörper mit zwei oder mehr, für das zu behandelnde gasförmige Medium durchlässigen Kanälen, wobei die Höhe der Kanäle kleiner als etwa 10 mm ist
b) ein bei einer Temperatur unterhalb von etwa 100 °C katalytisch aktives Material mit einer Teilchengröße unterhalb von etwa 0,5 mm
c) eine die Haftung des katalytischen Materials auf dem Träger bewirkende, dauerelastische Beschichtung aus organischem Material auf der Metallfolie.

Der Begriff "Metallfolie" umfaßt im Rahmen der vorliegenden Erfindung flexible Metallfolien, beispielsweise Aluminiumfolie, als auch formstabile Metallfolien wie Bleche, beispielsweise Eisen-, Stahl- oder Edelstahlblech. Die Dicke der Metallfolie liegt bevorzugt unterhalb von 0,2 mm, beispielsweise zwischen 0,05 und 0,2 mm.

Die Abstände zwischen den Metallfolien liegen bevorzugt unterhalb von 5 mm, besonders bevorzugt zwischen 1 und 3 mm. Der jeweils erwünschte Abstand zwischen zweien der Metallfolien, die die Kanäle bilden, bzw. zwischen den Windungen einer spiralig gewickelten Folie kann durch geeignete Einrichtungen, beispielsweise Haltestifte, Halterungen an der Stirnseite oder ähnliches festgelegt werden.

Es kann sich um Metallfolien verschiedenster Dimensionen handeln, beispielsweise um Metallfolie in Bänderform mit einer Breite von 1 bis 50 cm oder mehr und einer Länge von 0,1 bis 10 m. Verwendbar sind auch flächenförmige Metallfolien, beispielsweise mit einer Breite von 1 bis 100 cm und einer Länge von 0,1 bis 10 m.

Die Metallfolien können strukturiert sein, beispielsweise bogenförmig gewellt oder dreieckförmig, trapezförmig oder rechteckig geknickt oder gefaltet. Die Folien sind bevorzugt eben, weisen also eine glatte Oberfläche auf.

Die Metallfolien können zu verschiedensten Trägerkörpern angeordnet im erfindungsgemäßen Trägerkatalysator vorliegen. Sie können beispielsweise als Wabenkörper mit einer Vielzahl von Kanälen vorliegen, wobei der Abstand zweier Wände der Kanäle, wie oben angegeben, maximal etwa 10 mm beträgt. Die gebildeten Kanäle weisen dann beispielsweise einen rechteckigen, quadratischen, dreieckigen oder sechseckigen Querschnitt auf. Die Form des Wabenkörpers ist nicht kritisch. Es kann sich um Wabenkörper mit rechteckigen, runden oder ovalen Querschnitt handeln, wobei die Kanäle beispielsweise durch Wickeln strukturierter Folien, durch schichtförmig angeordnete strukturierte oder glatte Metallfolien etc. gebildet werden. Solche Wabenkörperformen sind bekannt. Sie können beispielsweise einen Querschnitt mit einer Höhe bzw. Breite von 2 bis 20 cm und eine Länge von 5 bis 30 cm aufweisen.

Der Trägerkörper kann aber auch andere Formen aufweisen. Er kann z.B. aus glatten, spiralig gewickelten Metallfolien gebildet sein. Der Trägerkörper kann beispielsweise auch aus 2 oder mehr Folien bestehen, die mehr oder weniger lang sind und, zu entsprechend vielen Rohren mit zunehmenden Radius ausgebildet, konzentrisch ineinandergeschoben vorliegen. Der Abstand der ineinandergeschobenen Rohre kann über die gesamte Länge konstant sein oder aber zu einer der Stirnseiten verjüngt. Der Abstand zwischen den durch die Rohrflächen gebildeten Schichten, der wie oben angegeben kleiner als etwa 10 mm sein soll, kann durch geeignete Einrichtungen, beispielsweise Haltestifte oder entsprechende Halterungen an der Stirnseite der Rohre festgelegt werden.

In einer weiteren Ausführungsform wird der Trägerkörper gebildet aus schichtförmig übereinander angeordneten, strukturierten oder glatten Metallfolien. Im Gegensatz zu Wabenkörpern, die Kanäle mit verhältnismäßig kleiner Eintritts-bzw. Austrittsfläche für das zu behandelnde Medium aufweisen, ist die Eintritts-bzw. Austrittsfläche bei solchen Ausführungsformen verhältnismäßig groß.

Die verschiedenen Trägerkörper können durch entsprechende Ummantelung oder Umbördelung der Folien quer zur Strömungsrichtung des zu behandelnden gasförmigen Mediums geschlossen sein.

Ein bevorzugter erfindungsgemäßer Trägerkatalysator zur katalytischen Behandlung gasförmiger Medien bei Temperaturen unterhalb von etwa 100 °C umfaßt:
a1) als Träger eine, zu einem spiraligen Trägerkörper gewickelte Metallfolie einer Dicke von höchstens 0,5 mm, wobei der Abstand zwischen den bei der Wicklung gebildeten Schichten kleiner als etwa 10 mm ist, oder
a2) als Träger mehrere Metallfolien einer Dicke von höchstens 0,5 mm, welche schichtweise angeordnet sind, wobei der Abstand der Schichten voneinander kleiner als etwa 10 mm ist
b) ein bei einer Temperatur unterhalb von 100 °C katalytisch aktives Material mit einer Teilchengröße unterhalb von etwa 0,5 mm
c) eine die Haftung des katalytischen Materials auf dem Träger bewirkende, dauerelastische Beschichtung aus organischem Material auf der Metallfolie.

Die Dicke der Metallfolien liegt bevorzugt unterhalb von 0,2 mm. Der Abstand der Metallfolien voneinander liegt bevorzugt unterhalb von 5 mm. Die Partikelgröße der katalytisch aktiven Teilchen beträgt bevorzugt 0,1 bis 0,3 mm.

In einer Variante wird also als Trägerkörper eine spiralig gewickelte Metallfolie verwendet. Die Zahl der Wicklungen kann 2 oder mehr betragen. Je nach Anwendungszweck kann der Trägerkörper mehr oder weniger lang sein, beispielsweise von wenigen Zentimetern bis hin zu 30 cm .

Dem Fachmann ist natürlich klar, daß die Leistungsfähigkeit des Trägerkatalysators umso größer ist, je größer die Fläche der Metallfolie ist, d.h. je länger der Trägerkörper und je größer die Zahl der Windungen ist. Der Trägerkatalysator kann so gewickelt sein, daß die Abstände der Wicklungen voneinander über die gesamte Länge längs der Strömungsrichtung im wesentlichen gleich sind, er kann aber auch so ausgeformt sein, daß er sich zu einer Seite hin konisch verjüngt. Zweckmäßigerweise ist die parallel zur Durchflußrichtung des zu behandelnden gasförmigen Mediums verlaufende Abschlußkante der äußeren Wicklung mit der vorhergehenden Wicklung der über die gesamte Länge des Trägerkörpers derartig gasdicht verbunden, daß ein Austritt des zu behandelnden gasförmigen Mediums radial zur Strömungsrichtung nicht auftritt.

Eine andere Variante des erfindungsgemäßen Trägerkatalysators umfaßt einen Träger, der aus mehreren, d.h. zwei oder mehr, Metallfolien gebildet wird, die schichtweise angeordnet sind.

Die Metallfolien können strukturiert sein, beispielsweise gewellt oder gefaltet, sie sind bevorzugt aber eben. Die Metallfolien können in verschiedenster Weise unter Ausbildung eines Trägerkörpers angeordnet sein.

In einer bevorzugten Ausführungsform verwendet man 2 oder mehr ebene Metallfolien, die schichtweise im wesentlichen parallel zueinander angeordnet sind, wobei der Abstand der Schichten voneinander, wie oben angegeben, kleiner als etwa 10 mm, bevorzugt kleiner als 5 mm, ist. Besonders bevorzugt verwendet man Trägerkörper, welche eine Vielzahl, beispielsweise 10 bis 500 Metallfolien umfassen, bevorzugt 30 bis 300 Metallfolien.

Auch bei dieser bevorzugten Ausführungsform kann die Länge und Breite der Metallfolien in einem weiten Bereich schwanken, beispielsweise kann man Metallfolien einer Länge von 10 bis 100 cm und einer Breite von 1 bis 10 cm oder mehr einsetzen. Auch hier gilt prinzipiell, daß die Leistungsfähigkeit des Trägerkatalysators umso größer ist, je größer die Fläche der verwendeten Trägerfolien ist.

Die verwendeten Metallfolien können einseitig oder, bevorzugt, auf beiden Seiten beschichtet sein.

Der Trägerkatalysator kann weiterhin eine Einrichtung zur Zuführung oder Abführung von Wärme aufweisen.

Eine geeignete Einrichtung zur Zuführung von Wärme sind beispielsweise elektrisch betriebene Heizvorrichtungen, beispielsweise Heizspiralen oder Heizstäbe oder ähnliches.

Es kann sich aber auch um Einrichtungen handeln, in denen die Zuführung oder Abführung von Wärme durch ein fluides Wärmetauschermedium, beispielsweise Heißluft, Kaltluft, organische oder anorganische Flüssigkeiten, z.B. Halogenkohlenwasserstoffe oder Wasser, bewirkt wird. Beim erfindungsgemäßen Trägerkatalysator, in welchem mehrere Metallfolien rohrförmig konzentrisch um eine gemeinsame Achse angeordnet sind, oder welche eine Mehrzahl von wabenförmig oder schichtweise im wesentlichen parallel zueinander angeordneten Metallfolien umfassen, geschieht dies am einfachsten dadurch, daß ein oder mehrere der zwischen den Metallfolien gebildeten Kanäle nicht durch das katalytisch zu behandelnde gasförmige Medium, sondern durch das Wärmetauschermedium durchströmt wird. Diese Kanäle müssen dann von den anderen Kanälen abgeschlossen sein, damit keine Vermischung der zu behandelnden Gase und des Wärmetauschermediums erfolgt.

In einer bevorzugten Ausführungsform verwendet man als Einrichtung zur Zuführung oder Abführung von Wärme ein oder mehrere Rohre, durch welche das fluide Wärmetauschermedium zirkulieren kann.

Bei Trägerkatalysatoren, bei denen der Trägerkörper durch eine Vielzahl von schichtweise im wesentlichen parallel zueinander angeordneten Metallfolien gebildet ist, ist eine spezielle Anordnung dieser vom Wärmetauschermedium durchflossenen Rohre bevorzugt: es werden ein oder mehrere, durch das Wärmetauschermedium durchströmte Rohre zweckmäßig senkrecht zur Strömungsachse des katalytisch zu behandelnden Mediums und rechtwinkelig zu den schichtförmig angeordneten Metallfolien angeordnet. Ein solcher Trägerkatalysator kann auch als katalytischer Wärmetauscher bezeichnet werden.

Als Metallfolie sind im Prinzip Folien oder Bleche von beliebigen Metallen oder Legierungen verwendbar. Beispielsweise kann man Aluminiumfolien, Eisenbleche, Stahlbleche, oder Edelstahlbleche verwenden.

Als die Haftung bewirkende Trägerbeschichtung wird ein dauerelastisches, organisches Material verwendet. Brauchbar sind beispielsweise Klebstoffe aus organischen Polymeren, beispielsweise Acrylester, Allylester oder Silicone. Acrylester sind sehr gut geeignet. Im höheren Temperaturbereich, beispielsweise oberhalb 80 °C, sind bei entsprechend höherer Temperatur stabile Kleber zweckmäßig, beispielsweise Siliconharze.

Der erfindungsgemäße Trägerkatalysator eignet sich zur Anwendung in einer Vielzahl von katalytischen Behandlungsverfahren für gasförmige Medien, z.B. Prozeßgasreinigung oder Reingasherstellung.

Besonders eignet er sich als Trägerkatalysator zur katalytischen Zersetzung von Ozon und als Trägerkatalysator zur katalytischen Oxidation von Kohlenmonoxid.

Bei der Ausführungsform als Trägerkatalysator zur katalytischen Zersetzung von Ozon können als katalytisch aktives Material alle bekannten, die Zersetzung von Ozon katalysierenden Materialien verwendet werden. Hierzu zählen besonders Edelmetalle, insbesondere Palladium oder Platin, Metalloxide, insbesondere Übergangsmetalloxide, oder Gemische solcher Substanzen. Sehr gut geeignet sind gemischte Übergangsmetalloxide, insbesondere Mischungen, die Mangandioxid und Kupferoxid enthalten und unter dem Namen Hopcalit bekanntgeworden sind. Hopcalite können beispielsweise aus Mangandioxid und Kupferoxid bestehen, sie können aber auch noch Aktivatoren und Promotoren, beispielsweise andere Metalloxide wie Nickeloxid, Kobaltoxid, Silberoxid, Lithiumoxid und/oder Kaliumoxid enthalten. Sehr gut geeignet ist das von der Firma Kali-Chemie erhältliche Mischoxid SG 2118, ein Mangandioxid-Kupferoxid-Gemisch mit Binder.

Das katalytisch aktive Material besitzt eine Partikelgröße von bis zu 0,5 mm. Es besitzt vorzugsweise eine Partikelgröße von 0,05 bis 0,3 mm.

Der fertige Trägerkatalysator enthält das katalytisch aktive Material in einer Menge von bis zu 30 Gew.-%, bevorzugt in einer Menge von 1 bis 20 Gew.% , bezogen auf den fertigen Trägerkatalysator.

Die Anwendung eines erfindungsgemäßen Trägerkatalysators, der die vorstehend beschriebenen, die Ozonzersetzung katalysierende Materialien aufweist, zur katalytischen Zersetzung von Ozon in ozonhaltiger Luft ist ebenfalls Gegenstand der Erfindung. Bei der Anwendung wird die ozonhaltige Luft über den ozonzersetzenden Trägerkatalysator geleitet.

Bei der Ausführungsform als Trägerkatalysator zur katalytischen Oxidation von Kohlenmonoxid ist als katalytisch aktives Material ein Gemisch von Gold und Eisen(III)oxid, ein Gemisch von Gold und Trikobalttetroxid, ein Gemisch von Eisen und Nickeloxid oder ein Gemisch solcher Gemische enthalten. Das katalytisch aktive Material liegt in einer Partikelgröße bis 0,5 mm, vorzugsweise in einer Partikelgröße von 0,05 bis 0,3 mm vor.

Sofern das Gold im Gemisch mit Eisen(III)oxid vorliegt, liegt das Atomverhältnis zwischen Gold und Eisen im Bereich von etwa 1:999 bis etwa 1:4, vorzugsweise zwischen etwa 1:99 bis 1:9, besonders bevorzugt zwischen etwa 1:49 bis etwa 1:14.

Sofern das Gold im Gemisch mit Trikobalttetraoxid vorliegt, liegt das Atomverhältnis zwischen Gold und Kobalt in dem auch für Eisen angegebenen Bereich.

Sofern das Gold im Gemisch mit Nickel(II)oxid vorliegt, liegt das Atomverhältnis zwischen Gold und Nickel im Bereich von 1:49 bis 1:8.

In einer bevorzugten Ausführungsform enthält die katalytisch aktive Komponente ein Gemisch von Gold und Eisen(III)oxid. In einer besonders bevorzugten Ausführungsform besteht die katalytisch aktive Komponente aus einem solchen Gemisch.

Im folgenden wird die Herstellung der katalytisch aktiven Komponente beschrieben.

Zur Herstellung der katalytisch aktiven Komponente wird in einem ersten Schritt ein Gemisch einer Goldverbindung und einer Eisen-, Kobalt- oder Nickelverbindung erzeugt. Der Einfachheit halber wird im folgenden nur noch das Erzeugen eines Gemisches einer Goldverbindung und einer Eisenverbindung detailliert beschrieben. In analoger Weise lassen sich auch Gemische mit Kobalt- bzw. Nickelverbindungen herstellen.

Das gewünschte Gemisch einer Goldverbindung und einer Eisenverbindung kann nach verschiedenen Varianten erhalten werden.

Gemäß einer Variante stellt man eine Lösung her, die eine gelöste Goldverbindung und eine gelöste Eisenverbindung enthält. Nach dem Entfernen des Lösungsmittels, z.B. durch Abdampfen, erhält man das gewünschte Gemisch einer Goldverbindung und einer Eisenverbindung.

Gemäß einer anderen Variante verwendet man als Eisenverbindung Eisenoxid, z.B. Hämatit, und tränkt dieses Material mit der Lösung einer Goldverbindung. Das beim Tränken erhaltene Gemisch kann gewünschtenfalls getrocknet werden.

Gemäß einer bevorzugten Variante wird zunächst eine Lösung hergestellt, welche eine gelöste Goldverbindung und eine gelöste Eisenverbindung enthält. Durch Zugabe eines für beide Metallsorten wirksamen Fällmittels, beispielsweise einer Base, erzeugt man ein gemeinsam gefälltes Gemisch einer Goldverbindung und einer Eisenverbindung, beispielsweise ein gemeinsam gefälltes Gemisch von Goldhydroxid und Eisenoxidhydrat. Dieses Gemisch kann dann gewünschtenfalls getrocknet werden.

Als Lösungsmittel sind in den vorstehend beschriebenen Varianten organische Lösungsmittel, beispielsweise Alkohole, Nitrile wie Acetonitril oder andere Lösungsmittel wie Dimethylformamid anwendbar, gegebenenfalls im Gemisch mit Wasser. Bevorzugtes Lösungsmittel ist reines Wasser.

Als Goldverbindung können beispielsweise Salze verwendet werden, die Goldkationen enthalten, beispielsweise Goldhalogenide, insbesondere Goldtrichlorid. Verwendet werden können auch Salze mit komplexierten Goldkationen, wobei als Komplexbildner beispielsweise Ammoniak oder mit Niedrigalkylgruppen substituierte primäre, sekundäre oder tertiäre Amine in Frage kommen. Beispielsweise ist Gold-(Diäthylamin)-Trichlorid verwendbar.

Es können beispielsweise auch solche Goldverbindungen verwendet werden, die das Gold in Form komplexer Anionen enthalten. Verwendbar sind beispielsweise die gewünschtenfalls hydratisierten Goldsäuren, wie Halogenogoldsäuren, insbesondere Tetrachlorogoldsäure, ferner Cyanogoldsäure oder Nitratogoldsäure sowie die entsprechenden Alkalimetallsalze, z.B. das Kaliumsalz.

Als lösliche Goldverbindung verwendet man im Verfahren der vorliegenden Erfindung bevorzugt Tetrachlorogoldsäure-Tetrahydrat.

Die Konzentration der Lösung der Goldverbindung ist nicht kritisch. Sie beträgt vorteilhafterweise zwischen etwa 5 g/l und 100 g/l Lösungsmittel.

Zur Herstellung von Eisensalzlösungen verwendet man vorteilhaft Lösungen von Salzen des dreiwertigen Eisens. Bei Verwendung von Salzen des zweiwertigen Eisens schließt sich noch eine oxidative Behandlung zur Überführung in dreiwertiges Eisen an. Dies kann beispielsweise beim noch zu beschreibenden Calcinieren durch anwesenden Luftsauerstoff geschehen. Beispielsweise kann man Eisensalze mit den Anionen organischer Säuren, z.B. Ameisensäure, bevorzugt aber Salze mit den Anionen anorganischer Säuren einsetzen. Geeignet sind beispielsweise Eisenhalogenide und -pseudohalogenide, insbesondere Eisenchlorid. Sehr gut geeignet ist Eisennitrat. Die Konzentration des Eisensalzes beträgt vorteilhafterweise zwischen etwa 10 und 400 g/l Lösungsmittel.

Gemäß der bevorzugten Ausführungsform stellt man zunächst eine Lösung her, vorzugsweise eine wäßrige Lösung, welche eine gelöste Goldverbindung, vorzugsweise Tetrachlorogoldsäure, und eine gelöste Eisenverbindung, vorzugsweise Eisennitrat enthält, und kontaktiert die erhaltene Lösung mit einem Fällmittel, beispielsweise mit einer Base. Als Base eignen sich beispielsweise basische Alkalimetall- oder Ammoniumverbindungen, z.B. Ammoniakwasser, Natron- oder Kalilauge, Natrium-, Kalium- oder Ammoniumcarbonat oder -hydrogencarbonat. Besonders geeignet sind Ammoniumverbindungen, insbesondere Ammoniumcarbonat. Die Base verwendet man vorteilhafterweise in Form einer Lösung, insbesondere in Form einer wäßrigen Lösung. Die Konzentration ist nicht kritisch und liegt vorteilhafterweise zwischen 10 g/l und 300 g/l.

In einer bevorzugten Ausführungsform setzt man bei der Erzeugung des Gemisches von Goldverbindung und Eisenverbindung solche Mengen ein, welche einem Atomverhältnis von Gold zu Eisen von 1 : 999 bis 1 : 4, vorzugsweise von 1 : 99 bis 1 : 9, insbesondere von 1 : 49 bis 1 : 14, entsprechen.

Die nach einer der vorstehend beschriebenen Vorgehensweisen erhältlichen Gemische von Goldverbindung und Eisen-, Kobalt- oder Nickelverbindung können bei Temperaturen zwischen 50 und 150 °C getrocknet werden. Das gewünschtenfalls getrocknete Gemisch wird zur Umwandlung in die katalytisch aktive Komponente bei Temperaturen von mindestens 200 °C calciniert. Dies kann in einer Atmosphäre aus inerten Gasen wie beispielsweise Stickstoff geschehen. Vorteilhaft erfolgt das Calcinieren in Luft. Es erfolgt über eine Zeitdauer von mehreren Stunden, beispielsweise von 1 bis zu 24 Stunden. Erst durch dieses Calcinieren wird das Gemisch aktiviert und ist dann als katalytisch aktive Komponente für die Oxidation von Kohlenmonoxid bei Temperaturen unterhalb von etwa 100 °C verwendbar. Die Calcinierungstemperatur liegt vorzugsweise zwischen etwa 250 °C und etwa 500 °C.

Vorteilhafterweise sollte die katalytisch aktive Komponente in Form möglichst kleiner Partikelchen auf das Trägermaterial aufgebracht werden. Besonders geeignet sind Partikelgrößen unterhalb von 0,3 mm. Sofern die katalytisch aktive Komponente nach dem Calcinieren nicht in Form entsprechend kleiner Partikelchen vorliegt, wird sie durch an sich bekannte Verfahren auf Partikelgrößen unterhalb von etwa 0,5 mm zerkleinert, gewünschtenfalls auf unterhalb 0,3 mm, insbesondere zwischen etwa 0,05 und 0,3 mm, beispielsweise durch Kugelmühlen oder Schlagmühlen.

Der Trägerkatalysator zur katalytischen Oxidation von Kohlenmonoxid enthält das katalytisch aktive Material in einer Menge von bis zu 30 Gew.-%, vorzugsweise in einer Menge von 1 bis 20 Gew.-%, bezogen auf das Gesamtgewicht von verwendeter Metallfolie, die Haftung vermittelnder Beschichtung und katalytisch aktivem Material.

Ein besonders bevorzugter Trägerkatalysator zur katalytischen Oxidation von Kohlenmonoxid in der Gasphase bei Temperaturen unterhalb von etwa 100 °C umfaßt a) einen Trägerkörper, welcher durch mehrere, flächenförmig ausgebildete, Metallfolien einer Dicke von höchstens 0,3 mm gebildet ist, welche schichtweise im wesentlichen parallel zueinander angeordnet sind, wobei der Abstand der Schichten voneinander kleiner als etwa 5 mm ist, b) als katalytisch aktives Material ein Gemisch von Gold und Eisen(III)oxid mit einem Atomverhältnis von Gold zu Eisen zwischen 1:99 bis etwa 1:9, insbesondere zwischen etwa 1:49 bis 1:14, wobei das katalytisch aktive Material eine Partikelgröße kleiner als etwa 0,3 mm aufweist, c) eine die Haftung bewirkende Trägerbeschichtung aus organischem Material mit einer Schichtdicke kleiner als etwa 0,1 mm, d) ein oder mehrere, von einem fluiden Wärmetauschermedium durchflossene Kanäle, insbesondere von einem fluiden Wärmetauschermedium durchflossene Rohre. "Mehrere Metallfolien" bedeutet bei diesem Trägerkatalysator zwei oder mehr, vorzugsweise eine Vielzahl, z.B. 10 bis 500 Metallfolien, insbesondere 30 bis 300 Metallfolien.

Ein weiterer Gegenstand der Erfindung ist die Anwendung der erfindungsgemäßen Trägerkatalysatoren zur katalytischen Oxidation von Kohlenmonoxid in Kohlenmonoxid enthaltenen Gasen, insbesondere in Luft. Die erfindungsgemäßen Trägerkatalysatoren sind bereits bei Temperaturen unterhalb von etwa 100 °C verwendbar.

Sie sind katalytisch aktiv auch bei der Anwesenheit von Feuchtigkeit (Wasserdampf). Das zu oxidierende Kohlenmonoxid kann in verhältnismäßig geringer Konzentration, beispielsweise in einer Konzentration von etwa 5 ppm bis 100 ppm, aber auch in höheren Konzentrationen, bis hin zu 1 Vol-% und mehr, in den zu reinigenden Gasgemischen enthalten sein. Die erfindungsgemäßen Trägerkatalysatoren sind besonders gut geeignet zur Oxidation von Kohlenmonoxid in gegebenenfalls Feuchtigkeit enthaltender Luft bei Temperaturen unterhalb von etwa 100 °C. Ihren Anwendungsbereich finden sie beispielsweise in der Klimatechnik und sogenannten Selbstrettern, wie sie beispielsweise in Bergwerken, in industriellen Betrieben und bei Rettungsdiensten verwendet werden, ferner bei der Aufbereitung industrieller Abluft.

Bei der Anwendung zur Oxidation von Kohlenmonoxid bei Temperaturen unterhalb von etwa 100 °C leitet man ein Kohlenmonoxid und Sauerstoff enthaltendes Gas über einen der vorstehend beschriebenen Trägerkatalysatoren. Der Sauerstoffgehalt sollte zweckmäßigerweise mindestens der zur völligen Oxidation von Kohlenmonoxid notwendigen Menge entsprechen.

Bevorzugt ist ein Anwendungsverfahren, in welchem man Kohlenmonoxid enthaltende Luft über einen nach einem der vorstehend beschriebenen Herstellverfahren erhältlichen Trägerkatalysator leitet. Hierbei kann es sich um trockene Luft oder um feuchte, wasserhaltige Luft handeln, welche Wasserdampf in kleinen Mengen bis hin zur Sättigung, beispielsweise zwischen etwa 0,1 % und 80 % relativer Feuchte enthält.

Bevorzugt führt man das Verfahren zur Oxidation von Kohlenmonoxid bei Temperaturen unterhalb von etwa 50 °C, insbesondere bei Umgebungstemperatur, d.h. zwischen etwa 15 und etwa 25 °C durch.

Eine Quelle für die Luftverunreinigung mit Kohlenmonoxid stellen die Abgase von Verbrennungsmotoren dar. Diese mit CO verunreinigte Luft ist gleichzeitig aber die Atemluft für Verkehrsteilnehmer, beispielsweise Autofahrer und -beifahrer, Lastwagenfahrer und -beifahrer, Autobusfahrer und -Passagiere. Ein besonderes Anwendungsgebiet des erfindungsgemäßen Trägerkatalysators liegt in der Reinigung der Luft, die den Fahrzeuginnenräumen von Personenwagen, Nutzfahrzeugen und Autobussen zugeführt wird. Die erfindungsgemäßen Trägerkatalysatoren erfüllen diese Aufgabe sehr gut, da sie ohne Energiebedarf bei tiefer Temperatur den Kohlenmonoxidgehalt aus Luft wirksam entfernen können. Sie sind lange Zeit aktiv und werden in ihrer Aktivität trotz naturgemäß wechselndem Feuchtigkeitsgehalt der zu reinigenden Luft nicht oder kaum beeinflußt.

Ganz besonders vorteilhaft ist die Anwendung desjenigen Trägerkatalysators zur katalytischen Oxidation von Kohlenmonoxid, welcher ein oder mehrere von einem fluiden Wärmetauschermedium durchflossene Einrichtungen, insbesondere Kanäle, Rohre o.ä. aufweist. Dieser Trägerkatalysator, der auch als katalytischer Wärmetauscher angesehen werden kann, eignet sich ganz besonders zur Reinigung der Frischluft, welche Fahrzeuginnenräumen, insbsondere den Fahrer- oder Passagierkabinen von Kraftfahrzeugen wie Personenwagen, Bussen oder Nutzfahrzeugen zugeführt wird. Diese Frischluft wird nämlich üblicherweise über eine Wärmetauscher in die Innenräume geleitet. Durch geeignete Wärmetauschermedien, z.B. Kühlwasser, kann die Frischluft temperiert werden. Der erfindungsgemäße Trägerkatalysator zur katalytischen Oxidation von Kohlenmonoxid, der gleichzeitig auch Einrichtungen zum Wärmetausch aufweist, ist auch deshalb besonders vorteilhaft anwendbar, weil er anstelle der nichtkatalytischen Wärmetauscher eingesetzt werden kann. Ein zusätzlicher Platzbedarf ist hier nicht notwendig, außerdem ist die nachträgliche Nachrüstung möglich.

Weiterhin kann der CO-Oxidationskatalysator auch zur katalytischen Behandlung der Luft verwendet werden, welche Wohn- oder Arbeitsräumen zugeführt wird, oder zur katalytischen Behandlung der in solchen Räumen umgewälzten Luft, beispielsweise inkorporiert in Klimaanlagen. Der Kohlenmonoxidgehalt, beispielsweise durch Raucher erzeugt, wird dabei vermindert.

Die Herstellung der erfindungsgemäßen Trägerkatalysatoren kann prinzipiell gemäß zweier Varianten erfolgen.

Die eine Variante sieht vor, die Metallfolie bzw. die Metallfolien zunächst mit dem die Haftung vermittelnden, dauerelastischen organischen Polymer zu versehen, dann das in Form von Partikeln einer Größe von bis zu 0,5 mm, bevorzugt 0,3 mm, vorliegende katalytisch aktive Material aufzubringen und anschließend zweckmäßigerweise nach einer Wartezeit zur Trocknung oder Aushärtung des verwendeten Polymeren, die katalytisch beschichtete Metallfolie zu einem Trägerkörper zu verarbeiten, beispielsweise durch Wickeln der gegebenenfalls verformten Folien, durch Anordnen mehrerer Folien in Schichten, wobei der gewünschte, bevorzugt äquidistante Abstand der die Schichten bildenden Folien voneinander durch entsprechende Distanzstücke, Haltestifte, durch von dem Wärmeaustauschermedium durchflossene Rohre, oder ähnliches eingestellt wird. Den Abschluß der Schichten senkrecht zur Strömungsachse des katalytisch zu behandelnden Mediums können geeignete Platten, beispielsweise umlaufende, gewünschtenfalls katalytisch beschichtete Metallfolien bilden. Natürlich kann man einen solchen Abschluß auch durch entsprechende Umbördelung der schichtförmig angeordneten Folien bewirken.

Je nach Anwendungszweck und Ausführungsform des Trägerkatalysators können die mit dem katalytischen Material beschichteten Metallfolien auch zusätzlichen Bearbeitungsschritten unterworfen werden, beispielsweise kann man Löcher einstanzen, durch welche Rohre gesteckt werden können, durch die eine Wärmetauscherflüssigkeit zirkuliert, beispielsweise Kühlwasser.

Die Schicht des organischen Polymers soll möglichst dünn sein, zweckmäßigerweise soll sie dünner sein als die durchschnittliche Partikelgröße des katalytisch aktiven Materials. Besonders dünne Schichten kann man erzeugen, indem man das Polymer bzw. Prepolymer in einem geeigneten Lösungsmittel verdünnt und aufträgt.

Das katalytisch aktive Material kann beispielsweise in Rüttelmaschinen auf der mit dem Haftvermittler versehenen Folie aufgebracht werden.

Gemäß einer anderen Variante werden die erfindungsgemäßen Trägerkatalysatoren hergestellt, indem man die bereits zu einem Trägerkörper angeordneten Metallfolien mit der die Haftung vermittelten dauerelastischen organischen Verbindung versieht und dann das in Form von Partikeln einer Größe von bis zu 0,5 mm, bevorzugt 0,3 mm vorliegende katalytisch aktive Material aufbringt.

Man kann also eine entsprechende Metallfolie beispielsweise aufwickeln oder aber mehrere Metallfolien schichtweise zu einem entsprechenden Trägerkörper anordnen, wobei der gewünschte Abstand der Schichten voneinander wiederum durch geeignete Haltestifte oder Distanzstücke eingestellt werden kann. Verwendbar ist auch ein nichtkatalytischer Wärmetauscher als Trägerkörper.

Der Trägerkörper wird dann mit einer möglichst dünnen Schicht aus dauerelastischem organischem Polymer beschichtet, wobei die Schicht wiederum möglichst dünner ist als die durchschnittliche Partikelgröße des katalytischen aktiven Materials. Besonders dünne Schichten des organischen Polymers werden erhalten, wenn man das organische Polymer in einem geeigneten Lösungsmittel verdünnt und in dieser verdünnten Form auf den Trägerkörper aufbringt. Es empfiehlt sich dann eine gewisse Wartezeit vor der weiteren Verwendung zur vollständigen Trocknung oder Aushärtung des Polymers.

Auf die dünne Schicht des organischen Polymers wird dann das katalytisch aktive Material aufgebracht, beispielsweise indem man es durch den Trägerkörper rieseln läßt oder auf ihn aufbläst.

Nach dem Trocknen oder Aushärten ist der fertige Trägerkatalysator fertig und verwendbar.

Die erfindungsgemäßen Trägerkatalysatoren sind sehr leicht herzustellen, wirksam bei verhältnismäßig tiefer Temperatur, schlagstabil, und können als katalytische Wärmetauscher ohne weiteren Platzbedarf anstelle nichtkatalytischer Wärmetauscher verwendet werden.

Das folgende Beispiel soll die Erfindung weiter erläutern, ohne sie in ihrem Umfang einzuschränken.

### Beispiel 1:

Herstellung eines zur katalytischen Oxidation von Kohlenmonoxid verwendbaren Trägerkatalysators
1.1. Herstellung des katalytisch aktiven Materials:
   Durch Auflösen von Tetrachlorogoldsäure und Eisen(III)nitrat in destilliertem Wasser wurde eine wäßrige Lösung hergestellt, welche 7 g/l Gold sowie 38 g/l Eisen enthielt. 14 ml dieser wäßrigen Lösung wurden mit 10 ml einer wäßrigen Lösung von Ammoniumcarbonat, deren Konzentration an Ammoniumcarbonat etwa 290 g/l betrug, unter Rühren versetzt. Der ausgefallene Feststoff wurde durch Filtrieren abgetrennt, während einer Zeitdauer von 24 Stunden bei etwa 25 °C getrocknet und anschließend 5 Stunden lang bei einer Temperatur von etwa 400 °C kalziniert. Der kalzinierte Feststoff wurde dann auf eine Teilchengröße von 0,09 mm in einer Reibschale zerkleinert.
   Ausbeute: etwa 750 mg
1.2. Beschichten des Trägermaterials mit der katalytisch aktiven Komponente
   Als Metallfolie wurde ein (flexibles) Aluminiumblech mit den Maßen 60 mm x 40 mm x 0,08 mm verwendet. Dieses Aluminiumblech wog 680 mg.
   Als die Haftung vermittelndes organisches Polymer wurde ein Acrylesterkleber verwendet (Kleber Sichello^{R} der Firma Henkel, Bezeichnung I6613). Der Kleber wurde in Aceton aufgelöst, so daß eine Lösung entstand, die 20 Gew.-% des Klebers enthielt. In diese Lösung wurde das Aluminiumblech getaucht, aus der Lösung herausgehoben und 30 Minuten bei etwa 80 °C getrocknet. Ein Auswiegen des mit dem Haftvermittler beschichteten Bleches ergab, daß 285,2 mg des Klebers auf dem Blech aufgebracht waren. Das beidseitig beschichtete Aluminiumblech wurde nun mit dem gemäß Beispiel 1.1. hergestellten katalytisch aktiven Material, das eine Körnung unterhalb 0,09 mm aufwies, bepudert. Ein Auswiegen ergab, daß 156,5 mg des Aktivmaterials auf dem Blech fixiert waren. Das mit dem katalytisch aktiven Material beschichtete Blech wurde dann noch 2 Stunden getrocknet.
   Anschließend wurde das Material spiralig aufgewickelt. Der Abstand der Wicklungen voneinander betrug etwa 8 mm.
1.3. Anwendung des gemäß Beispiel 1.2. hergestellten Trägerkatalysators zur katalytischen Oxidation von Kohlenmonoxid
   Durch den Trägerkatalysator wurde ein trockener Luftstrom in einer Menge von 10 l pro Stunde durch-geleitet. Dieser Luftstrom enthielt Kohlenmonoxid in einer Konzentration von 115 ppm. Die den Trägerkatalysator verlassende Luft wies einen Kohlenmonoxidgehalt von nur noch 101 ppm auf. Der Umsatz betrug demnach 12 %.

### Beispiel 2:

2.1. Herstellung des katalytisch aktiven Materials
   Das katalytisch aktive Material wurde wie unter 1.1. beschrieben hergestellt. Der Ansatz wurde jedoch vervierfacht. Die Ausbeute betrug 3 g.
2.2. Es wurde wiederum ein Aluminiumblech als Metallfolie verwendet. Die Ausmaße des Aluminiumbleches betrugen 228 mm x 48 mm x 0,08 mm. Das Blech wog 3,1 g. Es wurde wiederum der oben beschriebene Kleber Sichello^{R} verwendet, und zwar wiederum in Form einer 20 Gew.-% Kleber enthaltenden Lösung in Aceton. In diese Lösung wurde das Blech eingetaucht und herausgehoben. Nach einer kurzen Trocknungszeit wurde das Blech ausgewogen, und es stellte sich heraus, daß 1,9 g des Klebers auf beiden Seiten des Bleches aufgebracht waren.
   Das mit dem Kleber beschichtete Blech wurde mit dem gemäß 2.1. hergestellten katalytisch aktiven Material, das in einer Reibschale auf eine Partikelgröße von unterhalb 0,25 mm gebracht worden war, bepudert. Das Auswiegen des beschichteten Bleches ergab, daß etwa 2,0 g des katalytisch aktiven Materials auf den Seiten des Bleches fixiert waren.
   Dieses beschichtete Blech wurde spiralförmig auf einen Durchmesser von 2,5 cm aufgerollt.
2.3. Anwendung des gemäß 2.2. hergestellten Trägerkatalysators
   Durch den spiralförmig gewickelten Trägerkatalysator wurde ein trockener Luftstrom in einer Menge von 90 l pro Stunde bei einer Temperatur von 25 °C durchgeleitet. Der Luftstrom enthielt vor Eintritt in den Katalysator etwa 100 ppm Kohlenmonoxid. Die den Trägerkatalysator verlassende Luft enthielt nur noch 59 ppm Kohlenmonoxid. Der Umsatz betrug somit 41 %.

## Patentansprüche

1. Trägerkatalysator zur katalytischen Behandlung gasförmiger Medien bei Temperaturen unterhalb von etwa 100 °C, umfassend:
a) einen aus Metallfolie einer Dicke von höchstens 0,5 mm gebildeten Trägerkörper mit zwei oder mehr, für das zu behandelnde gasförmige Medium durchlässigen Kanälen, wobei die Höhe der Kanäle kleiner als etwa 10 mm ist,
b) ein bei einer Temperatur unterhalb von etwa 100 °C katalytisch aktives Material mit einer Teilchengröße unterhalb von etwa 0,5 mm
c) eine die Haftung des katalytischen Materials auf dem Träger bewirkende, dauerelastische Beschichtung aus organischem Material auf der Metallfolie.

2. Trägerkatalysator nach Anspruch 1 umfassend:
a1) als Träger eine, zu einem spiraligen Trägerkörper gewickelte Metallfolie einer Dicke von höchstens 0,5 mm, wobei der Abstand zwischen den bei der Wicklung gebildeten Schichten kleiner als etwa 10 mm ist, oder
a2) als Träger mehrere Metallfolien einer Dicke von höchstens 0,5 mm, welche schichtweise angeordnet sind, wobei der Abstand der Schichten voneinander kleiner als etwa 10 mm ist,

3. Trägerkatalysator nach Anspruch 2, dadurch gekennzeichnet, daß der Trägerkörper eine Vielzahl flächenförmig ausgebildeter, schichtweise im wesentlichen parallel zueinander angeordneter Metallfolien umfaßt.

4. Trägerkatalysator nach einem der vorhergehenden Ansprüche, dadurch gekennzeichnet, daß die Metallfolie beidseitig mit dem katalytisch aktiven Material beschichtet ist.

5. Trägerkatalysator nach einem der vorhergehenden Ansprüche, dadurch gekennzeichnet, daß er weiterhin eine Einrichtung zur Zuführung oder Abführung von Wärme aufweist.

6. Trägerkatalysator nach Anspruch 5, dadurch gekennzeichnet, daß die Einrichtung zur Zuführung oder Abführung von Wärme ein oder mehrere, von einem fluiden Wärmetauschermedium durchflossene Kanäle sind.

7. Trägerkatalysator nach einem der Ansprüche 1 bis 6 zur katalytischen Zersetzung von Ozon, dadurch gekennzeichnet, daß das katalytisch aktive Material ein Edelmetall, insbesondere Palladium oder Platin, oder ein Metalloxid, insbesondere ein Übergangsmetalloxid, oder ein Gemisch von solchen ist.

8. Trägerkatalysator nach einem der Ansprüche 1 bis 6 zur katalytischen Oxidation von Kohlenmonoxid, dadurch gekennzeichnet, daß das katalytisch aktive Material ein Gemisch von Gold und Eisen(III)oxid, ein Gemisch von Gold und Trikobalttetroxid, ein Gemisch von Gold und Nickeloxid oder ein Gemisch solcher Gemische ist.

9. Trägerkatalysator nach Anspruch 8 dadurch gekennzeichnet, daß das katalytisch aktive Material ein Gemisch von Gold und Eisen(III) oxid, ist.

10. Trägerkatalysator nach Anspruch 9, dadurch gekennzeichnet, daß der Trägerkörper durch eine Vielzahl von flächenförmig ausgebildeten Metallfolien gebildet wird, welche schichtweise im wesentlichen parallel zueinander angeordnet sind, und welcher weiterhin eine oder mehrere, von einem fluiden Wärmetauschermedium durchflossene Kanäle aufweist.

11. Anwendung eines Trägerkatalysators nach einem der Ansprüche 1 bis 7 zur katalytischen Zersetzung von Ozon in ozonhaltiger Luft.

12. Anwendung eines Trägerkatalysators nach einem der Ansprüche 1 bis 6, 8, 9 oder 10 zur katalytischen Oxidation von Kohlenmonoxid in Kohlenmonoxid enthaltender Luft.

13. Anwendung des Trägerkatalysators nach Anspruch 10 zur katalytischen Behandlung der Fahrzeuginnenräumen zugeführten Frischluft.

14. Anwendung des Trägerkatalysators nach Anspruch 8, 9 oder 10 zur katalytischen Behandlung der Wohn- oder Arbeitsräumen zugeführten Luft oder der in solchen Räumen umgewälzten Luft.

## Claims

1. A supported catalyst for the catalytic treatment of gaseous media at temperatures below about 100°C, comprising:
a) a support body made of metal foil of a thickness of at most 0.5 mm and having two or more channels permeable to the gaseous medium to be treated, the height of the channels being less than about 10 mm,
b) a material having a particle size below about 0.5 mm, which is catalytically active at a temperature below about 100°C,
c) a permanently elastic coating of organic material on the metal foil, which coating brings about the adhesion of the catalytic material to the support.

2. A supported catalyst according to Claim 1, comprising:
a1) as the support a metal foil of a thickness of at most 0.5 mm which has been wound into a spiral support body, the distance between the layers formed upon winding being less than about 10 mm, or
a2) as the support a plurality of metal foils of a thickness of at most 0.5 mm which are arranged in layers, the distance of the layers from each other being less than about 10 mm.

3. A supported catalyst according to Claim 2, characterised in that the support body comprises a large number of laminar metal foils which are arranged substantially parallel to each other in layers.

4. A supported catalyst according to one of the preceding Claims, characterised in that the metal foil is coated on both sides with the catalytically active material.

5. A supported catalyst according to one of the preceding Claims, characterised in that it also has a means for supplying or removing heat.

6. A supported catalyst according to Claim 5, characterised in that the means for supplying or removing heat is one or more channels through which a fluid heat exchange medium flows.

7. A supported catalyst according to one of Claims 1 to 6 for the catalytic decomposition of ozone, characterised in that the catalytically active material is a precious metal, in particular palladium or platinum, or a metal oxide, in particular a transition metal oxide, or a mixture of these.

8. A supported catalyst according to one of Claims 1 to 6 for the catalytic oxidation of carbon monoxide, characterised in that the catalytically active material is a mixture of gold and iron (III) oxide, a mixture of gold and tricobalt tetroxide, a mixture of gold and nickel oxide or a mixture of such mixtures.

9. A supported catalyst according to Claim 8, characterised in that the catalytically active material is a mixture of gold and iron (III) oxide.

10. A supported catalyst according to Claim 9, characterised in that the support body is formed by a large number of laminar metal foils which are arranged substantially parallel to each other in layers, which body furthermore has one or more channels through which a-fluid heat exchange medium flows.

11. The use of a supported catalyst according to one of Claims 1 to 7 for the catalytic decomposition of ozone in ozone-containing air.

12. The use of a supported catalyst according to one of Claims 1 to 6, 8, 9 or 10 for the catalytic oxidation of carbon monoxide in air containing carbon monoxide.

13. The use of the supported catalyst according to Claim 10 for the catalytic treatment of fresh air supplied to the interiors of vehicles.

14. The use of the supported catalyst according to Claim 8, 9 or 10 for the catalytic treatment of the air supplied to housing rooms or working rooms or the air circulated in such rooms.

## Revendications

1. Catalyseur supporté pour le traitement catalytique de milieux gazeux à des températures inférieures à environ 100°C, comprenant
a) un support constitué par une feuille métallique d'une épaisseur maximale de 0,5 mm avec deux ou davantage de canaux perméables au milieu gazeux à traiter, la hauteur des canaux étant inférieure à environ 10 mm,
b) une matière catalytiquement active à une température inférieure à environ 100°C ayant une taille de particule inférieure à environ 0,5 mm,
c) un revêtement en matière organique à élasticité permanente sur la feuille métallique qui assure l'adhérence de la matière catalytique au support.

2. Catalyseur supporté selon la revendication 1 comprenant,
a1) en tant que support, une feuille métallique d'une épaisseur maximale de 0,5 mm, enroulée en forme de support en spirale, l'écartement entre les couches formées lors de l'enroulement étant inférieur à environ 10 mm ou,
a2) en tant que support, plusieurs feuilles métalliques d'une épaisseur maximale de 0,5 mm qui sont disposées en couches, l'écartement entre les couches étant inférieur à environ 10 mm.

3. Catalyseur supporté selon la revendication 2, caractérisé en ce que le support comprend une multitude de feuilles métalliques planiformes disposées en couches, sensiblement parallèles les unes par rapport aux autres.

4. Catalyseur supporté selon l'une des revendications précédentes, caractérisé en ce que la feuille métallique est recouverte, sur les deux faces, de la matière catalytiquement active.

5. Catalyseur supporté selon l'une des revendications précédentes, caractérisé en ce qu'il comporte en outre un dispositif pour l'apport ou l'évacuation de la chaleur.

6. Catalyseur supporté selon la revendication 5, caractérisé en ce que le dispositif pour l'apport ou l'évacuation de la chaleur est constitué d'un ou de plusieurs canaux parcourus par un milieu échangeur de chaleur fluide.

7. Catalyseur supporté selon l'une des revendications 1 à 6, pour la décomposition catalytique de l'ozone, caractérisé en ce que la matière catalytiquement active est un métal précieux, en particulier le palladium ou le platine, ou un oxyde métallique, notamment un oxyde de métal de transition, ou un mélange de ceux-ci.

8. Catalyseur supporté selon l'une des revendications 1 à 6 pour l'oxydation catalytique de l'oxyde de carbone, caractérisé en ce que la matière catalytiquement active est un mélange d'or et d'oxyde de fer(III), un mélange d'or et de tétroxyde de tricobalt, un mélange d'or et d'oxyde de nickel ou un mélange de tels mélanges.

9. Catalyseur supporté selon la revendication 8, caractérisé en ce que la matière catalytiquement active est un mélange d'or et d'oxyde de fer(III).

10. Catalyseur supporté selon la revendication 9, caractérisé en ce que le support est formé d'une multitude de feuilles métalliques planiformes qui sont disposées en couches, sensiblement parallèles les unes par rapport aux autres et comporte en outre un ou plusieurs canaux parcourus par un milieu échangeur de chaleur fluide.

11. Utilisation d'un catalyseur supporté selon l'une des revendications 1 à 7 pour la décomposition catalytique de l'ozone dans de l'air ozoné.

12. Utilisation d'un catalyseur supporté selon l'une des revendications 1 à 6, 8, 9 ou 10 pour l'oxydation catalytique de l'oxyde de carbone dans de l'air contenant de l'oxyde de carbone.

13. Utilisation d'un catalyseur supporté selon la revendication 10 pour le traitement catalytique de l'air frais admis dans les espaces intérieurs de véhicules.

14. Utilisation d'un catalyseur supporté selon la revendications 8, 9 ou 10 pour le traitement catalytique de l'air admis dans des locaux d'habitation ou de travail ou de l'air circulant dans de tels locaux.
